(19) **Europäisches Patentamt**
**European Patent Office**
**Office européen des brevets**

(11) **EP 4 258 078 A1**

(12) # EUROPEAN PATENT APPLICATION
published in accordance with Art. 153(4) EPC

(43) Date of publication:
**11.10.2023 Bulletin 2023/41**

(21) Application number: **21918228.4**

(22) Date of filing: **13.01.2021**

(51) International Patent Classification (IPC):
**G05D 1/02** (2020.01)

(52) Cooperative Patent Classification (CPC):
**G05D 1/024; G05D 1/0272; G05D 1/0274;**
**G05D 2201/0213**

(86) International application number:
**PCT/CN2021/071394**

(87) International publication number:
**WO 2022/151011 (21.07.2022 Gazette 2022/29)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventor: **LI, Jun**
**Shenzhen, Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **POSITIONING METHOD AND APPARATUS, AND VEHICLE**

(57) A positioning method and apparatus (700), and a vehicle (100) are provided, and relate to the field of sensing technologies. The method includes: detecting that the vehicle (100) is passing through a looped road (S201); constructing a first map of the looped road based on three dimensional point cloud (S203); translating and/or rotating a location of the vehicle (100) on the first map (S205); performing similarity comparison between a translated and/or rotated first map and a stored road map that the vehicle (100) historically passes through and determining a second map (S207); and determining, based on the second map, location information of the vehicle (100) before translation and/or rotation (S209). In a positioning process performed by using an SLAM technology, considering that a location and a heading angle may change when the vehicle (100) travels to a same environment, translation search and rotation search are proposed. In comparison with an image of a stored reference frame, the location and the heading angle of the vehicle (100) are changed, so that the image obtained through comparison is more accurate, and positioning is more accurate.

FIG. 2

**Description**

**TECHNICAL FIELD**

The present invention relates to the field of sensing technologies, and in particular, to a positioning method and apparatus, and a vehicle.

**BACKGROUND**

For an automatic driving system or an advanced assisted driving system applied to a vehicle, precise real-time positioning is a prerequisite for safety and stability of the vehicle. An existing positioning technology applied to a vehicle is positioning based on a global navigation satellite system (global navigation satellite system, GNSS). However, when a vehicle that is positioned by using the GNSS technology passes through an easily blocking area such as a bridge or a tunnel, a satellite signal is likely to be lost. Consequently, the vehicle has a security risk.

**SUMMARY**

To resolve the foregoing positioning defect in the conventional art, embodiments of this application provide a positioning method and apparatus, and a vehicle.

According to a first aspect, this application provides a positioning method, including: detecting that a vehicle is passing through a looped road, where the looped road is a road whose shape is annular or whose turning angle is 360 degrees; constructing a first map of the looped road based on three dimensional point cloud; translating and/or rotating a location of the vehicle on the first map; performing similarity comparison between a translated and/or rotated first map and a stored road map that the vehicle historically passes through and determining a second map, where the second map is a map that is similar to the first map and that is in the stored road map that the vehicle historically passes through; and determining, based on the second map, location information of the vehicle before translation and/or rotation.

In this implementation, in a positioning process performed by using an SLAM technology, considering that a location and a heading angle may change when the vehicle travels to a same environment, translation search and rotation search are proposed. In comparison with an image of a stored reference frame, the vehicle is translated and rotated on a map, so that a map obtained through comparison is more accurate, and vehicle positioning is more accurate.

In an implementation, before the constructing a first map of the looped road based on three dimensional point cloud, the method includes:
obtaining mileage information of a first time period, where the first time period is a time period in which the sensor scans and generates one frame of three dimensional point cloud, and the mileage information is information recorded by an odometer; calculating pose information of the sensor in the first time period based on the mileage information of the first time period; and performing motion compensation on the three dimensional point cloud of the frame corresponding to the first time period based on the pose information, to obtain a corrected three dimensional point cloud. The constructing a first map of the looped road based on three dimensional point cloud includes: constructing the first map of the looped road based on the corrected three dimensional point cloud.

In this implementation, because the vehicle is moving, each frame of three dimensional point cloud obtained by scanning by a camera sensor has an error as the vehicle moves. Consequently, motion compensation correction needs to be performed on each frame of three dimensional point cloud based on mileage information between start time and end time of each frame of three dimensional point cloud obtained by scanning, to obtain an accurate three dimensional point cloud.

In an implementation, the method further includes performing 2.5 dimensional projection on the corrected three dimensional point cloud to obtain a 2.5 dimensional height map, where the 2.5 dimensional height map is a two dimensional map with a height that maps the three dimensional map to a plane according to a projection rule to display a three dimensional effect.

In this implementation, three dimensional point cloud is converted into a 2.5 dimensional height map of a corresponding frame. In comparison with original three dimensional point cloud, an expression manner of the 2.5 dimensional height map reduces calculation efficiency and storage efficiency. In comparison with a two dimensional probability occupancy grid map, the expression manner of the 2.5 dimensional height map adds height information, and has richer environment representation.

In an implementation, before the performing similarity comparison between a translated and/or rotated first map and a stored road map that the vehicle historically passes through, the method includes: performing similarity comparison between the first map and a map of each frame in the stored road map that the vehicle historically passes through, to determine a similarity value between the first map and the map of each frame.

In an implementation, the translating and/or rotating a location of the vehicle on the first map includes: translating the vehicle by a specified distance on the first map. The performing similarity comparison between a translated and/or rotated first map and a stored road map that the vehicle historically passes through includes: performing similarity comparison between a translated first map and a map of each frame in the stored road map that the vehicle historically passes through, to determine a similarity value between the translated first map and the map of each frame.

In an implementation, the translating and/or rotating a location of the vehicle on the first map include: rotating the vehicle by a specified angle on the first map.

The performing similarity comparison between a translated and/or rotated first map and a stored road map that the vehicle historically passes through includes: performing similarity comparison between a rotated first map and a map of each frame in the stored road map that the vehicle historically passes through, to determine a similarity value between the rotated first map and the map of each frame.

In an implementation, the performing similarity comparison between a translated and/or rotated first map and a stored road map that the vehicle historically passes through includes: performing rasterization processing on the translated and/or rotated first map and the map of each frame, and determining a subscript index of each grid and a height value of each grid, where the subscript index is coordinate information of the grid on the map; determining whether height values on the translated and/or rotated first map are the same as the height value corresponding to the same subscript index on the map of each frame; determining a first quantity of grids that are on the map of each frame and whose height values are the same as the height value corresponding to the same subscript index on the translated and/or rotated first map; and using a ratio of the first quantity of grids on the map of each frame to a total quantity of grids on the map of each frame as the similarity value.

In an implementation, after the performing similarity comparison between a translated and/or rotated first map and a stored road map that the vehicle historically passes through, the method further includes: determining a grid area that is on the first map and whose height value is different from a height value corresponding to the same subscript index on the second map; translating the grid area by several units of the subscript index; comparing a height value that is in the translated grid area and that corresponds to the same subscript index on the second map, and determining a second quantity of grids that are in the translated grid area and whose height values are the same as the height value corresponding to the same subscript index on the second map; and using a ratio of a sum of the second quantity of grids and the first quantity of grids to a total quantity of grids on the second map as the similarity value.

In an implementation, after the performing similarity comparison between a translated and/or rotated first map and a stored road map that the vehicle historically passes through, the method further includes: determining a grid area that is on the first map and whose height value is different from the height value corresponding to the same subscript index on the second map; rotating the grid area by a specified angle; comparing a height value that is in the rotated grid area with the height value corresponding to the same subscript index on the second map, and determining a third quantity of grids that are in the rotated grid area and whose height values are the same as the height value corresponding to the same subscript index on the second map; and using a ratio of a sum of the third quantity of grids, the second quantity of grids, and the first quantity of grids to the total quantity of grids on the second map as the similarity value.

In an implementation, the determining a second map includes: determining at least one map whose similarity value is greater than a specified threshold; and performing verification on the at least one map whose similarity value is greater than the specified threshold by using an iterative closest point ICP algorithm, and selecting the second image.

In this implementation, if a plurality of maps of the reference frames with high similarity are obtained through comparison, a map obtained at an adjacent moment of each reference frame is fused with the reference frame to obtain a plurality of fusion maps, and then verification is performed on the plurality of fusion maps and the first map by using ICP algorithm registration, to select an optimal reference frame.

According to a second aspect, an embodiment of this application provides a positioning apparatus, including: a detection unit, configured to detect that a vehicle is passing through a looped road, where the looped road is a road whose shape is annular or whose turning angle is 360 degrees; and a processing unit, configured to: construct a first map of the looped road based on three dimensional point cloud; translate and/or rotate a location of the vehicle on the first map; perform similarity comparison between a translated and/or rotated first map and a stored road map that the vehicle historically passes through and determine a second map, where the second map is a map that is similar to the first map and that is in the stored road map that the vehicle historically passes through; and determine, based on the second map, location information of the vehicle before translation and/or rotation.

In an implementation, a transceiver unit is configured to obtain mileage information of a first time period, where the first time period is a time period in which the sensor scans and generates one frame of three dimensional point cloud, and the mileage information is information recorded by an odometer. The processing unit is further configured to: calculate pose information of the sensor in the first time period based on the mileage information of the first time period; and perform motion compensation on the three dimensional point cloud of the frame corresponding to the first time period based on the pose information, to obtain a corrected three dimensional point cloud. The processing unit is specifically configured to construct the first map of the looped road based on the corrected three dimensional point cloud.

In an implementation, the processing unit is further configured to perform 2.5 dimensional projection on the corrected three dimensional point cloud to obtain a 2.5 dimensional height map, where the 2.5 dimensional height map is a two dimensional map with a height that maps the three dimensional map to a plane according to a projection rule to display a three dimensional effect.

In an implementation, the processing unit is configured to perform similarity comparison between the first map and a map of each frame in the stored road map that the vehicle historically passes through, to determine a similarity value between the first map and the map of each frame.

In an implementation, the processing unit is specifically configured to: translate the vehicle by a specified distance on the first map; and perform similarity comparison between a translated first map and a map of each frame in the stored road map that the vehicle historically passes through, to determine a similarity value between the translated first map and the map of each frame.

In an implementation, the processing unit is specifically configured to: rotate the vehicle by a specified angle on the first map; and perform similarity comparison between a rotated first map and a map of each frame in the stored road map that the vehicle historically passes through, to determine a similarity value between the rotated first map and the map of each frame.

In an implementation, the processing unit is specifically configured to: perform rasterization processing on the translated and/or rotated first map and the map of each frame, and determine a subscript index of each grid and a height value of each grid, where the subscript index is coordinate information of the grid on the map; determine whether height values on the translated and/or rotated first map are the same as the height value corresponding to the same subscript index on the map of each frame; determine a first quantity of grids that are on the map of each frame and whose height values are the same as the height value corresponding to the same subscript index on the translated and/or rotated first map; and use a ratio of the first quantity of grids on the map of each frame to the total quantity of grids on the map of each frame as the similarity value.

In an implementation, the processing unit is further configured to: determine a grid area that is on the first map and whose height value is different from a height value corresponding to the same subscript index on the second map; translate the grid area by several units of the subscript index; compare a height value that is in the translated grid area with the height value corresponding to the same subscript index on the second map, and determining a second quantity of grids that are in the translated grid area and whose height values are the same as the height value corresponding to the same subscript index on the second map; and use a ratio of a sum of the second quantity of grids and the first quantity of grids to the total quantity of grids on the second map as the similarity value.

In an implementation, the processing unit is further configured to: determine a grid area that is on the first map and whose height value is different from the height value corresponding to the same subscript index on the second map; rotate the grid area by a specified angle; compare a height value that is in the rotated grid area with the height value corresponding to the same subscript index on the second map, and determine a third quantity of grids that are in the rotated grid area and whose height values are the same as the height value corresponding to the same subscript index on the second map; and use a ratio of a sum of the third quantity of grids, the second quantity of grids, and the first quantity of grids to the total quantity of grids on the second map as the similarity value.

In an implementation, the processing unit is specifically configured to: determine at least one map whose similarity value is greater than a specified threshold; and perform verification on the at least one map whose similarity value is greater than the specified threshold by using an iterative closest point ICP algorithm, and select the second image.

According to a third aspect, an embodiment of this application provides a vehicle, configured to perform embodiments of the possible implementations of the first aspect.

According to a fourth aspect, an embodiment of this application provides a computer-readable storage medium, where the computer-readable storage medium stores a computer program, and when the computer program is executed on a computer, the computer is enabled to perform embodiments of possible implementations of the first aspect.

According to a fifth aspect, an embodiment of this application provides a computing device, including a memory and a processor, where the memory stores executable code, and when executing the executable code, the processor implements embodiments of possible implementations of the first aspect.

**BRIEF DESCRIPTION OF DRAWINGS**

The following briefly describes accompanying drawings that need to be used in descriptions of embodiments or a conventional technology.

FIG. 1 is a schematic diagram of a structure of a vehicle according to an embodiment of this application;
FIG. 2 is a schematic flowchart of a positioning method according to an embodiment of this application;
FIG. 3 is a framework diagram of a flowchart of a positioning method according to an embodiment of this application;
FIG. 4(a) is a schematic diagram of a historically stored height map according to an embodiment of this application;
FIG. 4(b) is a schematic diagram of a currently obtained height map in a scenario according to an embodiment of this application;
FIG. 4(c) is a schematic diagram of a currently obtained height map in a scenario according to an embodiment of this application;
FIG. 5 is a schematic diagram of translation search according to an embodiment of this application;
FIG. 6 is a diagram of effects of various loop closure detection experiments according to an embodiment of this application; and

FIG. 7 is a schematic block diagram of a structure of a positioning apparatus according to an embodiment of this application.

## DESCRIPTION OF EMBODIMENTS

The following describes technical solutions in embodiments of this application with reference to accompanying drawings in embodiments of this application.

To resolve a problem of a loss of a positioning signal of a vehicle, a positioning solution is currently being searched. In addition to constructing a map of a surrounding environment by sensing an environment by using a sensor, a simultaneous localization and mapping (simultaneous localization and mapping, SLAM) technology is used to model the surrounding environment in a moving process and estimate a pose of the vehicle, so as to implement positioning of the vehicle. Currently, based on different sensors used, the SLAM technology is mainly classified into two types: laser SLAM based on a laser radar and visual SLAM based on a camera. In a moving process of a vehicle, because both front-end pose estimation and back-end optimization are based on some adjacent data, an error generated in the front-end pose estimation and back-end optimization inevitably accumulates to a next moment. Consequently, an accumulated error occurs in entire SLAM, and a result of long-term estimation is unreliable. To eliminate such errors, a closed loop detection module is introduced in an SLAM system. Closed loop detection, also referred to as loop closure detection (loop closure detection), is used to resolve a problem that location estimation drifts with time. By identifying a scenario where a vehicle has arrived, a constraint with a longer time interval is added to pose optimization, so that more accurate and globally consistent pose estimation is obtained. In another aspect, because the loop closure detection provides association between current data and all historical data, after trace is lost, the loop closure detection may be used for relocation. Therefore, the loop closure detection greatly improves the accuracy and robustness of the entire SLAM system.

There are two common types of loop closure detection as follows.

1. Loop closure detection based on a branch and bound method: On the basis of a two dimensional occupancy grid map, a search space is determined first, and then the search space is used as a tree expression to narrow the search space. Because selection of the search space is limited to a specific radius range near a current location, only a situation of loop closure detection of the search space within a local radius can be considered, and loop closure detection cannot be performed in a space outside the search space. Consequently, a loop closure detection error is likely to occur.

2. Loop closure detection based on feature descriptor extraction and matching: In a loop closure detection process, classification is performed based on a random forest, and depends on a differentiation degree of feature descriptors and an effect of object segmentation, and directly using point cloud information in a grid is ignored. Consequently, in some similar but non-loop closure scenarios, because object segmentation and extracted feature descriptors do not have a differentiation degree, loop closure is very likely to be identified by a final classifier, which causes a loop closure detection error.

To resolve an existing problem that an error occurs in loop closure detection, an embodiment of this application proposes a positioning method. Considering that a location and a heading angle may change when a vehicle travels to a same environment, translation search and rotation search are proposed. In comparison with an image of a stored reference frame, the location and the heading angle of the vehicle are changed, so as to resolve a problem of a loop closure detection error caused by direct search in an existing solution, so as to improve robustness of the loop closure detection and to position more accurately.

The following describes the technical solutions of this application by using a scenario in which an unmanned vehicle is used as a mobile platform and a laser sensor is disposed on the unmanned vehicle as an example. For a person skilled in the art, a platform to which the technical solutions of this application are applied is not limited to an unmanned vehicle, but may also be a device that needs to perform precise positioning, for example, a man-driven vehicle, a ship, or a train.

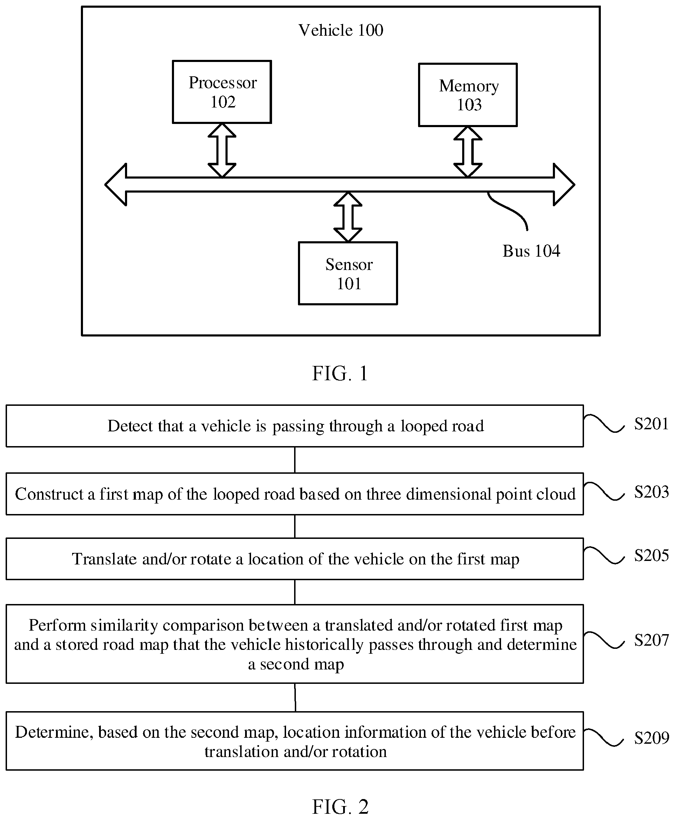

FIG. 1 is a schematic diagram of a structure of a vehicle according to an embodiment of this application. A vehicle 100 is shown in FIG. 1. The vehicle 100 includes a laser radar sensor 1012, a processor 102, a memory 103, and a bus 104. The laser radar sensor 1012, the processor 102, and the memory 103 may establish a communication connection by using the bus 104.

The sensor 101 is separately, based on collected information, a motion sensor 1011 and the radar sensor 1012.

The motion sensor 1011 may be an odometer, an accelerometer, a speedometer, an inertia measurement unit, or the like, and is configured to collect mileage information in a vehicle running process, for example, information such as a trip, a track, or a speed. In this application, the odometer is used as an example.

In this application, the radar sensor 1012 is a laser radar sensor 1012, and the laser radar sensor 1012 is disposed at each location of the vehicle 100, and is configured to transmit and receive a laser signal in a surrounding environment of the vehicle 100, to collect laser point cloud of the surrounding environment of the vehicle 100. For ease of solution description in this application, only one laser radar sensor 1012 is used as an example. Alternatively, a plurality of laser radar sensors 1012 may be used to collect the laser point cloud, and then the processor 102 fuse the laser point cloud collected by the plurality of laser radar sensors 1012, to obtain more accurate laser point cloud. In addition, in this application, only the laser radar sensor 1012 is used as an example. Certainly, a visual sensor may alternatively be used. This is not limited herein.

The processor 102 may be an on-board central control unit, a central processing unit (central processing unit, CPU) 102, a cloud server, or the like, and is configured to process the laser point cloud collected by the laser radar sensor 1012, to obtain a 2.5 dimensional height map corresponding to laser point cloud of each frame and mileage information of each moment.

The memory 103 may include a volatile memory (volatile memory), for example, a random-access memory (random-access memory, RAM). The memory may alternatively include a non-volatile memory (non-volatile memory), for example, a read-only memory (read-only memory, ROM), a flash memory, a hard disk drive (hard disk drive, HDD), or a solid state drive (solid state drive, SSD). The memory 103 may alternatively include a combination of the foregoing types of memories.

Data stored in the memory 103 not only includes laser point cloud data collected by the laser radar sensor 1012 and laser point cloud data of each frame previously collected by the vehicle 100 during positioning, but also includes various instructions, an application program, or the like corresponding to a positioning method.

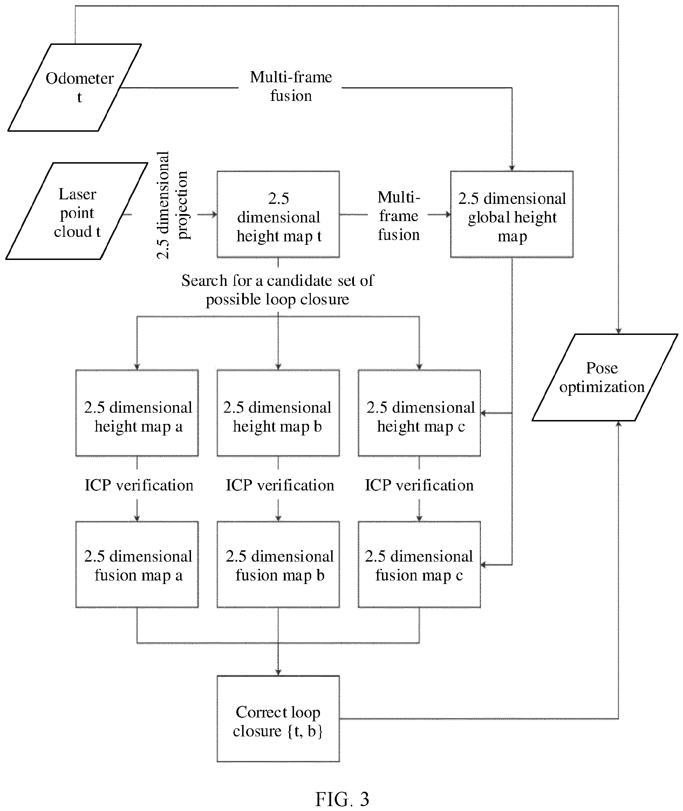

The processor 102 performs a specific process of the positioning method. In this application, the specific implementation process is described with reference to a step framework diagram of an execution procedure shown in FIG. 2 and a framework diagram of a procedure shown in FIG. 3.

Step S201: Detect that a vehicle is passing through a looped road. The looped road is a road whose shape is annular, for example, a circle or an oval, or whose turning angle is 360 degrees.

Specifically, in a moving process of the vehicle 100, the motion sensor 1011 in the vehicle 100 collects information such as a trip, a track, or a speed of the vehicle 100 in real time, to provide mileage information for a laser SLAM system. The processor 102 obtains mileage information in real time. If it is detected, based on the information such as a trip, a track, or a speed in the motion sensor 1011, that the vehicle 100 travels on a looped road, the processor 102 records a start moment t1 and an end moment t2 at which the vehicle 100 passes through the looped road. The mileage information is collected by the motion sensor in the vehicle 100, and may be information such as a trip, a track, or a speed.

In addition, when the vehicle 100 enables a positioning function, a processor 102 controls the laser radar sensor 1012 to scan a surrounding environment of the vehicle 100 in real time. The laser sensor transmits a laser beam, scans the surrounding environment of the vehicle 100 based on a specific track, and records reflected laser point information while scanning, to obtain a large quantity of laser points. Then, laser point cloud of a plurality of frames is obtained with one scanning period as one frame. When laser is irradiated on the surface of the object, reflected laser carries information such as an orientation or a distance. Therefore, obtained laser point cloud of each frame can be used to construct three dimensional point cloud of the surrounding environment of the vehicle.

Optionally, after obtaining the laser point cloud of a plurality of frames, the processor 102 performs 2.5 dimensional projection on the laser point cloud of each frame, and converts three dimensional point cloud into a 2.5 dimensional height map of a corresponding frame. In comparison with original three dimensional point cloud, an expression manner of the 2.5 dimensional height map reduces calculation efficiency and storage efficiency. In comparison with a two dimensional probability occupancy grid map, the expression manner of the 2.5 dimensional height map adds height information, and has richer environment representation.

When the processor 102 constructs a 2.5 dimensional height map of a frame corresponding to a first moment (which is subsequently referred to as a "moment t"), because the vehicle 100 is moving, an error exists in the 2.5 dimensional height map at the moment t that is obtained by scanning by the laser sensor 1012 as the vehicle 100 moves. Consequently, the processor 102 needs to perform motion compensation correction on the 2.5 dimensional height map at the moment t based on mileage information between start time and end time, where the 2.5 dimensional height map at the moment t is obtained by scanning from the start time to the end time, so as to obtain a precise 2.5 dimensional height map at the moment t.

For example, for three dimensional point cloud of a corresponding frame obtained through k times of scanning, start time of the $k^{th}$ scanning is denoted as $t_k$, and end time is denoted as $t_k+1$. In this case, an expression of pose transformation of the laser radar sensor 1012 between two moments is:

$$\mathrm{T}_k^L = \left[ t_x, t_y, t_z, \theta_x, \theta_y, \theta_z \right]^T ; (1)$$

$t_x$, $t_y$, and $t_z$ respectively represent translation transformation of a location of the laser radar sensor 1012 along x-axis, y-axis, and z-axis of a coordinate system of the laser radar sensor 1012, and $\theta_x$, $\theta_y$, and $\theta_z$ respectively represent rotation transformation and comply with a right hand rule.

A pose of the laser radar sensor 1012 during each scanning is calculated by using a linear interpolation method:

$$\mathrm{T}^{L}_{(k,i)} = \frac{t_i - t_k}{t_{k+1} - t_k} \mathrm{T}^{L}_{k} \; ; (2)$$

$t_i$ represents a moment corresponding to the $i^{th}$ scanning, and $\mathrm{T}^{L}_{(k,i)}$ represents a pose of the laser radar sensor 1012 during the $i^{th}$ scanning.

Based on the pose of the laser radar sensor 1012 during each scanning and according to Euclidean transformation, three dimensional point cloud of a corresponding frame obtained by the $k^{th}$ scanning is projected to a start moment of current rotation, to obtain more precise three dimensional point cloud of the corresponding frame obtained by the $k^{th}$ scanning:

$$\mathrm{X}^{L}_{(k,i)} = R X'^{L}_{(k,i)} + \mathrm{T}^{L}_{(k,i)}[1:3] \; ; (3)$$

$\mathrm{X}^{L}_{(k,i)}$ is coordinates of each point of the point cloud obtained during scanning, $X'^{L}_{(k,i)}$ is coordinates of a start moment of corresponding rotation, $\mathrm{T}^{L}_{(k,i)}[1:3]$ is first three items in $\mathrm{T}^{L}_{(k,i)}$, and R is a constant that is related to $\mathrm{T}^{L}_{(k,i)}$ and that is calculated according to a Rodrigues formula.

Step S203: Construct a first map of the looped road based on the three dimensional point cloud. The first map is a height map including the looped road.

In this application, after obtaining the 2.5 dimensional height map of the frame corresponding to the moment t, the processor 102 then obtains 2.5 dimensional height maps of a plurality of frames within time period before the moment t, and combines, with reference to mileage information at a corresponding moment and by using a multi-frame fusion splicing technology, a height map of the looped road on which the vehicle is located at the moment t. For example, the processor 102 constructs, based on mileage information at a start moment t1 and an end moment t2, a looped road track map including time. Then the processor 102 invokes, from the memory 103, 2.5 dimensional height maps of all frames between the start moment t1 and the end moment t2, and splices the 2.5 dimensional height map of all frames on the looped road track map in a time sequence, to construct the 2.5 dimensional height map including the looped road.

Step S205: Translate and/or rotate a location of the vehicle on the first map.

Step S207: Perform similarity comparison between a translated and/or rotated first map and a stored road map that the vehicle historically passes through and determine a second map.

The first map is compared with the stored road map that the vehicle historically passes through by translation search and rotation search. In this application, a map that is compared herein is the 2.5 dimensional height map including the looped road, and an obtained map also includes each 2.5 dimensional height map including the looped road.

A 2.5 dimensional height map stored in the memory 103 is a height map of a road that the vehicle 100 has passed through when the positioning function has been enabled before. In this application, the memory 103 stores the 2.5 dimensional height map. When the 2.5 dimensional height map is invoked for comparison, the processor 102 establishes a mapping relationship between a subscript index $(r_i, c_i)$ of a grid and a height value $\mu$ for an invoked 2.5 dimensional height map, that is, performs rasterization processing on a height map of each frame, to construct a two dimensional coordinate system by using a lower left corner of the constructed 2.5 dimensional height map including the looped road as a coordinate origin. A location of each grid in the coordinate system is used as a subscript index, a plane on which a transmit end that transmits laser light by the laser sensor 1012 is located is used as a coordinate system plane, and a distance between an object existing in each grid and the plane is used as a height value (where being located above the plane is positive, and being located below the plane is negative).

In a loop closure detection process, it only needs to be determined whether a height value in the 2.5 dimensional height map at the moment t is the same as a height value in a 2.5 dimensional height map of a reference frame to be compared. Then a quantity of grids with the same height value is counted, and a ratio of the quantity of grids with the same height value to a total quantity of grids is calculated. Then a maximum value in ratios of a 2.5 dimensional height map of each reference frame to the 2.5 dimensional height map at the moment t is compared with a specified threshold. If the maximum value in the ratios is greater than the specified threshold, it is considered that a similarity between a 2.5 dimensional height map of a reference frame corresponding to the maximum value in the ratios and the 2.5 dimensional height map at the moment t is the highest, and it may be considered that the 2.5 dimensional height map of the reference frame corresponding to the maximum value in the ratios is a map of a location of the vehicle 100 at the moment t. If the maximum value in the ratios is not greater than the specified threshold, it is considered that the location of the vehicle 100 at the moment t is a place that the vehicle 100 has not passed through before.

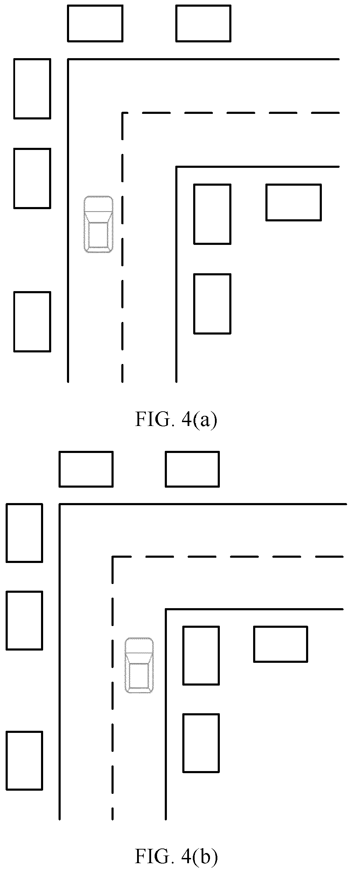

When the vehicle 100 travels to a historically accessed environment, the vehicle 100 is not at a same location, and a horizontal offset is generated in a relative location, as shown in FIG. 4(a) and FIG. 4(b). FIG. 4(a) represents a 2.5 dimensional height map of a reference frame that has been stored when the vehicle 100 previously accessed. FIG. 4(b) represents the 2.5 dimensional height map of the frame corresponding to the location of the vehicle 100 at the moment t. In comparison with FIG. 4(a), in FIG. 4(b), the vehicle is shifted rightwards by one lane. If a ratio of two frames is less than the specified threshold, but a location in FIG. 4(a) is the location that the vehicle 100 has passed through, an error occurs in the loop closure detection. Consequently, this application provides a translation search technology. In a translation search process, the processor 102 determines a grid area of the subscript index $(r;, c_i)$ corresponding to different height values in FIG. 4(b), and then translates the grid area leftward, rightward, downward, or upward by one unit of the subscript index (using rightward as an example) to obtain a subscript index $(r;+i, c_i)$, and then compares a height value with a same subscript index in FIG. 4(a) of the reference frame. If the height values are the same, a quantity of translated grids is also included in the grids with the same height value that are previously compared, and then a ratio of the quantity of grids with the same height value to the total quantity of grids is recalculated. When the recalculated ratio is greater than the specified threshold, it is considered that the location of the vehicle 100 in FIG. 4(b) is a location corresponding to the reference frame stored in FIG. 4(a). When the recalculated ratio is still not greater than the specified threshold, it is considered that the location of the vehicle 100 in FIG. 4(b) is a place that the vehicle 100 has not passed through before. If the height values are not the same, the grid area is translated rightward by one more unit of the subscript index, and then the comparison is performed. The rest may be deduced by analogy, until the grid area reaches the rightmost side in FIG. 4(b) and cannot be translated anymore.

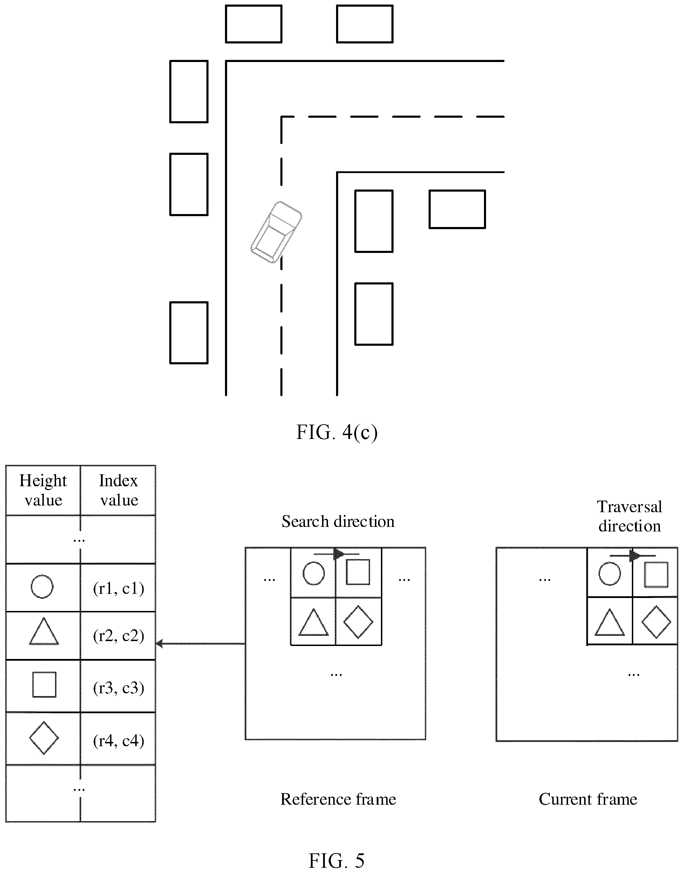

For example, as shown in FIG. 5, after obtaining a 2.5 dimensional height map Mt of a current frame, the processor 102 records each grid $m_j$ $(\mu_j, r_j, c_j)$ on the 2.5 dimensional height map of the current frame, and then obtains a set $(M_1, M_2, M_3, ..., M_{t-1})$ of all historical reference frames from the memory 103. In addition, a mapping relationship f $(\mu \rightarrow (r_i, c_i))$ between a height value of each grid in a 2.5 dimensional height map of each reference frame and a grid index is recorded. In a translation search process, the processor 102 searches for a subscript index $(r;, c_i)$ of a corresponding grid in the mapping relationship of each reference frame based on each grid in the current frame, and then performs depth first search on a nearby grid $(r_{i\pm1}, c_{i\pm1})$ to search for a corresponding grid index $(r_k, c_k)$. A depth first search direction $(\pm1, \pm1)$, that is, upward, downward, leftward, or rightward, and a search direction $(r_k-r_i, c_k-c_i)$ of matched grids in the reference frame are recorded. If the directions are the same, the grid is added to the set of matched grids, and the search continues. Finally, a matching score of a matched grid set of each reference frame is calculated. For a matched grid, it is specified that a vector composed by a height value of a 2.5 dimensional height map at a moment t is $\mu_t$, and a vector composed by a height value of a 2.5 dimensional height map of a reference frame is $\mu_i$. A matching score is:

$$U_i = 1 - \frac{\mu_t \cdot \mu_i}{|\mu_t| \cdot |\mu_i|}; \quad (4)$$

For an unmatched grid, it is specified that a vector composed by the height value of the 2.5 dimensional height map at the moment t is vt, and a vector composed by the height value of the 2.5 dimensional height map of the reference frame is $v_i$. A matching score is:

$$V_i = 1 - \frac{v_t \cdot v_i}{|v_t| \cdot |v_i|}; \quad (5)$$

The proportion of the matching scores is:

$$D_i = \frac{U_i}{V_i}; \quad (6)$$

Finally, a similarity to the 2.5 dimensional height map at the moment t is determined based on a weight of a matching score of each reference frame. A larger weight indicates a lower similarity, and a smaller weight indicates a higher similarity. The foregoing using a ratio of quantities of grids as the determining standard is to facilitate understanding by a person skilled in the art and a person viewing this patent, and is essentially the same.

Finally, the processor 102 obtains a matching score $D=[D_1, D_2, D_3, ..., D_{t-1}]$ of each reference frame.

When the vehicle 100 travels to a historically accessed environment, the vehicle 100 is not at a same location, and not only a horizontal offset is generated in a relative location, but a heading angle of the vehicle 100 is also changed, as shown in FIG. 4(c). FIG. 4(c) represents the 2.5 dimensional height map of the frame corresponding to the location of the vehicle 100 at the moment t. In comparison with FIG. 4(a), in FIG. 4(c), the vehicle is shifted rightwards by half of a lane, and a heading angle is shifted by about 45 degrees. If a ratio of two frames after the translation search is still less than the specified threshold, but a location in FIG. 4(c) is the location that the vehicle 100 has passed through, an error still occurs in the loop closure detection. Consequently, this application provides a rotation search technology. In a rotation search process, the processor 102 determines a grid area of the subscript index $(r;, c_i)$ corresponding to different height values in FIG. 4(c). Translation search is first performed. The grid area is translated rightward by one unit of the subscript index, to obtain a subscript index $(r;+i, c_i)$. When a height value of the subscript index is still different from a height value of a same subscript index in a reference frame in FIG. 4(a), the grid area is rotated by a specific angle, to obtain a rotated subscript index ($r_k$, $c_k$). A height value of the rotated subscript index is compared with a height value of a same subscript index in the reference frame in FIG. 4 (a). If the height values are the same, a quantity of translated and rotated grids is also included in the grids with the same height value that are previously compared, and then a ratio of the quantity of grids with the same height value to the total quantity of grids is recalculated. When the recalculated ratio is greater than the specified threshold, it is considered that the location of the vehicle 100 in FIG. 4(c) is a location corresponding to the reference frame stored in FIG. 4(a). When the recalculated ratio is still not greater than the specified threshold, it is considered that the location of the vehicle 100 in FIG. 4(c) is a place that the vehicle 100 has not passed through before. If the height values are not the same, the grid area is rotated by a specific angle again, and then the comparison is performed. The rest may be deduced by analogy, until the grid area rotates by 360 degrees, and then the grid area is translated rightward by one more unit of the subscript index, to perform comparison. The rest may be deduced by analogy, until the grid area reaches the rightmost side in FIG. 4(c) and cannot be translated anymore, and the grid area has been rotated by 360 degrees.

After the processor 102 performs translation search and rotation search, if a plurality of 2.5 dimensional height maps of the reference frame whose ratios are greater than the specified threshold are obtained, the processor 102 fuses a 2.5 dimensional height map that is obtained at an adjacent moment of each reference frame with the reference frame, to obtain a plurality of fusion maps, and then performs verification on the fusion maps and the 2.5 dimensional height map at the moment t by iterative closest point (iterative closest point, ICP) algorithm registration, to select an optimal 2.5 dimensional height map of the reference frame.

A verification principle of an ICP algorithm is as follows. It is assumed that there are two point cloud data sets P and G. P needs to be converted to G (where it is assumed that two groups of point cloud have parts with similar local geometric features). P may cross multiply a quaternion matrix to perform rotation and translation, to transform to G. Alternatively, P may be converted to a location of G by using an SVD method. A general idea is that a 4x4 rotation translation matrix is required. After each rotation and translation transformation, the distances from all (sampling) points of P to the (nearest) point corresponding to G are calculated, and a least square error is calculated by using the least square method (variance calculation) to check whether the least square error is within a required range. If the least square error is less than a specified value (or a number of iterations reaches an upper limit, or the least square error does not change in a small range after each iteration), the calculation ends. Otherwise, the iteration continues.

In this application, the processor 102 receives a 2.5 dimensional height map set ($M_{t-a}$, $M_{t-b}$, $M_{t-c}$, ..., $M_x$)

of a candidate reference frame and the 2.5 dimensional height map Mt at the moment t, obtains a height map [$M_{t-a-n}$, $M_{t-a+n}$] adjacent to each candidate reference frame and corresponding pose information [$T_{t-a-n}$, $T_{t-a+n}$], and obtains a 2.5 dimensional height fusion map $GM_{(ta-n)\to(t-a+n)}$ through calculation, a registered ICP ICP $M_{t-a}$ is calculated by using the fusion map and the 2.5 dimensional height map of the current frame, and the optimal 2.5 dimensional height map of the reference frame is obtained by using a formula (7), where the formula (7) is:

$$s = \min \left( ICPM_{t-a} \cdots ICPM_{t-x} \right) ; (7)$$

Step S209: Determine, based on the second map, location information of the vehicle before translation and/or rotation.

Specifically, after obtaining the matched second map, the processor 102 determines that the location of the vehicle 100 at the current moment t is the location corresponding to the second map stored in the memory 103, and then optimizes the vehicle 100 based on mileage information of the vehicle 100 in a current running process, to eliminate a drift error of positioning before loop closure, so that positioning is more accurate.

According to the loop closure detection method provided in the embodiment of this application, considering that a location and a heading angle may change when a vehicle travels to a same environment, the translation search and the rotation search are proposed. In comparison with an image of a stored reference frame, the location and the heading angle of the vehicle are changed, to avoid an error caused by direct comparison in an existing solution, so as to improve robustness of the loop closure detection.

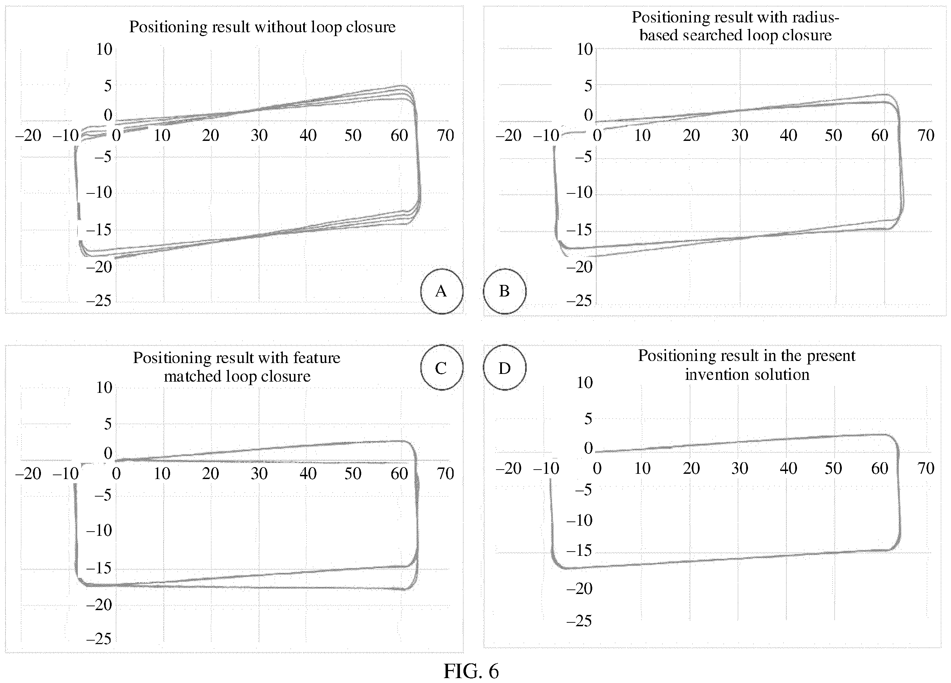

In verifying a technical effect of the loop closure detection method provided by the present invention, the present invention is verified by a test vehicle equipped with a 16-line laser radar sensor. The test vehicle travels four circles in an underground garage scenario. All solutions depend on the same mileage information and original point cloud collected by the laser radar as input. Finally, a result of comparison with pure odometer positioning without loop closure matching, a radius-based loop closure search method, and a feature descriptor-based matching method is shown in FIG. 6. Figure A shows a positioning result without loop closure optimization of the test vehicle after four circles of driving, which has a large accumulated error. Figure B shows a positioning result with radius-based loop closure search, where algorithm reduces the accumulated error to a specific extent, but loop closure beyond a radius range of the search is not found. Consequently, an error of this part is not optimized. Figure C shows a positioning result based on feature matching loop closure, where an algorithm depends on extraction and matching of feature descriptors. However, matching is difficult to perform in some similar scenarios, and a larger offset error is generated in a loop closure optimization process of the algorithm. Figure D shows a positioning result obtained according to the technical solution of the present invention. After four circles of driving, this solution can search for loop closure more robustly, so as to obtain an accurate pose.

By comparing the experimental data shown in FIG. 6, quantities of loop closure found in the solution of the present invention and the other two types of methods and positioning precision are counted. In comparison with an existing technical solution, the solution of the present invention improves loop closure precision by 20%, and correspondingly obtained positioning precision is improved from 80 centimeters to 30 centimeters compared with an existing method.

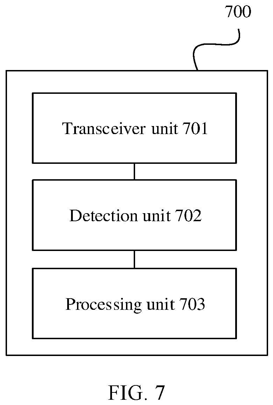

FIG. 7 is a schematic diagram of a structure of a positioning apparatus according to an embodiment of the present invention. FIG. 7 shows a positioning apparatus 700. The positioning apparatus 700 includes a transceiver unit 701, a detection unit 702, and a processing unit 703.

The positioning method provided in the foregoing embodiment is executed by the positioning apparatus 700, and is specifically implemented as follows.

The detection unit 702 is configured to detect that a vehicle is passing through a looped road, where the looped road is a road whose shape is annular or whose turning angle is 360 degrees. The processing unit 703 is configured to: construct a first map of the looped road based on three dimensional point cloud; translate and/or rotate a location of the vehicle on the first map; perform similarity comparison between a translated and/or rotated first map and a stored road map that the vehicle historically passes through and determine a second map, where the second map is a map that is similar to the first map and that is in the stored road map that the vehicle historically passes through; and determine, based on the second map, location information of the vehicle before translation and/or rotation.

In an implementation, the transceiver unit 701 is configured to obtain mileage information of a first time period, where the first time period is a time period in which the sensor scans and generates one frame of three dimensional point cloud, and the mileage information is information recorded by an odometer. The processing unit 703 is further configured to: calculate pose information of the sensor in the first time period based on the mileage information of the first time period; and perform motion compensation on the three dimensional point cloud of the frame corresponding to the first time period based on the pose information, to obtain a corrected three dimensional point cloud. The processing unit is specifically configured to construct the first map of the looped road based on the corrected three dimensional point cloud.

In an implementation, the processing unit 703 is further configured to perform 2.5 dimensional projection on the corrected three dimensional point cloud to obtain a 2.5 dimensional height map, where the 2.5 dimensional height map is a two dimensional map with a height that maps the three dimensional map to a plane according to a projection rule to display a three dimensional effect.

In an implementation, the processing unit 703 is configured to perform similarity comparison between the first map and a map of each frame in the stored road map that the vehicle historically passes through, to determine a similarity value between the first map and the map of each frame.

In an implementation, the processing unit 703 is specifically configured to: translate the vehicle by a specified distance on the first map; and perform similarity comparison between a translated first map and a map of each frame in the stored road map that the vehicle historically passes through, to determine a similarity value between the translated first map and the map of each frame.

In an implementation, the processing unit 703 is specifically configured to: rotate the vehicle by a specified angle on the first map; and perform similarity comparison between a rotated first map and a map of each frame in the stored road map that the vehicle historically passes through, to determine a similarity value between the rotated first map and the map of each frame.

In an implementation, the processing unit 703 is specifically configured to: perform rasterization processing on the translated and/or rotated first map and the map of each frame, and determine a subscript index of each grid and a height value of each grid, where the subscript index is coordinate information of the grid on the map; determine whether height values on the translated and/or rotated first map are the same as the height value corresponding to the same subscript index on the map of each frame; determine a first quantity of grids that are on the map of each frame and whose height values are the same as the height value corresponding to the same subscript index on the translated and/or rotated first map; and use a ratio of the first quantity of grids on the map of each frame to the total quantity of grids on the map of each frame as the similarity value.

In an implementation, the processing unit 703 is further configured to: determine a grid area that is on the first map and whose height value is different from a height value corresponding to the same subscript index on the second map; translate the grid area by several units of the subscript index; compare a height value that is in the translated grid area with the height value corresponding to the same subscript index on the second map, and determining a second quantity of grids that are in the translated grid area and whose height values are the same as the height value corresponding to the same subscript index on the second map; and use a ratio of a sum of the second quantity of grids and the first quantity of grids to the total quantity of grids on the second map as the similarity value.

In an implementation, the processing unit 703 is further configured to: determine a grid area that is on the first map and whose height value is different from the height value corresponding to the same subscript index on the second map; rotate the grid area by a specified angle; compare a height value that is in the rotated grid area with the height value corresponding to the same subscript index on the second map, and determine a third quantity of grids that are in the rotated grid area and whose height values are the same as the height value corresponding to the same subscript index on the second map; and use a ratio of a sum of the third quantity of grids, the second quantity of grids, and the first quantity of grids to the total quantity of grids on the second map as the similarity value.

In an implementation, the processing unit 703 is specifically configured to: determine at least one map whose similarity value is greater than a specified threshold; and perform verification on the at least one map whose similarity value is greater than the specified threshold by using an iterative closest point ICP algorithm, and select the second image.

The present invention provides a computer-readable storage medium, where the computer-readable storage medium stores a computer program, and when the computer program is executed on a computer, the computer is enabled to implement any one of the foregoing methods.

The present invention provides a computing device, including a memory and a processor, where the memory stores executable code, and when executing the executable code, the processor implements any one of the foregoing methods.

A person of ordinary skill in the art may be aware that, in combination with examples described in embodiments disclosed in this specification, units and algorithm steps may be implemented by electronic hardware or a combination of computer software and electronic hardware. Whether the functions are performed in a form of hardware or software depends on particular applications and design constraints of the technical solution. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include and/or carry instructions and/or data.

In the foregoing embodiment, the positioning apparatus 700 in FIG. 7 may be implemented in whole or in part by using software, hardware, firmware, or any combination thereof. When implemented by using software, the positioning apparatus 700 may be implemented in whole or in part in a form of a computer program product. The computer program product includes one or more computer instructions. When the computer program instructions are loaded and executed on a computer, the procedures or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state drive Solid State Disk (SSD)), or the like.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may have another manner for division in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between apparatuses or units may be implemented in electronic, mechanical, or other forms.

The units described as separate components may or may not be physically separate. Components displayed as units may or may not be physical units, may be located in one position, or may be distributed on a plurality of network units. Some or all units may be selected based on an actual requirement to achieve the objectives of the solutions of embodiments.

When the functions are implemented in a form of a software function unit and sold or used as an independent product, the functions may be stored in a computer-readable storage medium. Based on such an understanding, the technical solutions of embodiments of this application essentially, or the part contributing to conventional technologies, or a part of the technical solutions may be implemented in a form of a software product. The computer software product is stored in a storage medium and includes several instructions for instructing a computer device (which may be a personal computer, a server, an access network device, or the like) to perform all or a part of the steps of the methods described in each of embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A positioning method, comprising:

   detecting that a vehicle is passing through a looped road, wherein the looped road is a road whose shape is annular or whose turning angle is 360 degrees;
   constructing a first map of the looped road based on three dimensional point cloud;

   translating and/or rotating a location of the vehicle on the first map;
   performing similarity comparison between a translated and/or rotated first map and a stored road map that the vehicle historically passes through and determining a second map, wherein the second map is a map that is similar to the first map and that is in the stored road map that the vehicle historically passes through; and
   determining, based on the second map, location information of the vehicle before translation and/or rotation.

2. The method according to claim 1, wherein before the constructing a first map of the looped road based on three dimensional point cloud, the method further comprises:

   obtaining mileage information of a first time period, wherein the first time period is a time period in which the sensor scans and generates one frame of three dimensional point cloud, and the mileage information is information recorded by an odometer;
   calculating pose information of the sensor in the first time period based on the mileage information of the first time period; and
   performing motion compensation on the three dimensional point cloud of the frame corresponding to the first time period based on the pose information, to obtain a corrected three dimensional point cloud; and
   the constructing a first map of the looped road based on three dimensional point cloud comprises:
   constructing the first map of the looped road based on the corrected three dimensional point cloud.

3. The method according to claim 2, wherein the method further comprises:
   performing 2.5 dimensional projection on the corrected three dimensional point cloud to obtain a 2.5 dimensional height map, wherein the 2.5 dimensional height map is a two dimensional map with a height that maps the three dimensional map to a plane according to a projection rule to display a three dimensional effect.

4. The method according to any one of claims 1 to 3, wherein before the performing similarity comparison between a translated and/or rotated first map and a stored road map that the vehicle historically passes through, the method comprises:
   performing similarity comparison between the first map and a map of each frame in the stored road map that the vehicle historically passes through, to determine a similarity value between the first map and the map of each frame.

5. The method according to any one of claims 1 to 4, wherein the translating and/or rotating a location of the vehicle on the first map comprises: translating the vehicle by a specified distance on the first map; and

the performing similarity comparison between a translated and/or rotated first map and a stored road map that the vehicle historically passes through comprises:

performing similarity comparison between a translated first map and a map of each frame in the stored road map that the vehicle historically passes through, to determine a similarity value between the translated first map and the map of each frame.

6. The method according to any one of claims 1 to 5, wherein the translating and/or rotating a location of the vehicle on the first map comprises: rotating the vehicle by a specified angle on the first map; and

the performing similarity comparison between a translated and/or rotated first map and a stored road map that the vehicle historically passes through comprises:

performing similarity comparison between a rotated first map and a map of each frame in the stored road map that the vehicle historically passes through, to determine a similarity value between the rotated first map and the map of each frame.

7. The method according to any one of claims 1 to 6, wherein the performing similarity comparison between a translated and/or rotated first map and a stored road map that the vehicle historically passes through comprises:

performing rasterization processing on the translated and/or rotated first map and the map of each frame, and determining a subscript index of each grid and a height value of each grid, wherein the subscript index is coordinate information of the grid on the map;
determining whether height values on the translated and/or rotated first map are the same as the height value corresponding to the same subscript index on the map of each frame;
determining a first quantity of grids that are on the map of each frame and whose height values are the same as the height value corresponding to the same subscript index on the translated and/or rotated first map; and
using a ratio of the first quantity of grids on the map of each frame to a total quantity of grids on the map of each frame as the similarity value.

8. The method according to claim 7, wherein after the performing similarity comparison between a translated and/or rotated first map and a stored road map that the vehicle historically passes through, the method further comprises:

determining a grid area that is on the first map and whose height value is different from a height value corresponding to the same subscript index on the second map;
translating the grid area by several units of the subscript index;
comparing a height value that is in the translated grid area with the height value corresponding to the same subscript index on the second map, and determining a second quantity of grids that are in the translated grid area and whose height values are the same as the height value corresponding to the same subscript index on the second map; and
using a ratio of a sum of the second quantity of grids and the first quantity of grids to a total quantity of grids on the second map as the similarity value.

9. The method according to any one of claim 7 or 8, wherein after the performing similarity comparison between a translated and/or rotated first map and a stored road map that the vehicle historically passes through, the method further comprises:

determining a grid area that is on the first map and whose height value is different from the height value corresponding to the same subscript index on the second map;
rotating the grid area by a specified angle;
comparing a height value that is in the rotated grid area with the height value corresponding to the same subscript index on the second map, and determining a third quantity of grids that are in the rotated grid area and whose height values are the same as the height value corresponding to the same subscript index on the second map; and
using a ratio of a sum of the third quantity of grids, the second quantity of grids, and the first quantity of grids to the total quantity of grids on the second map as the similarity value.

10. The method according to any one of claims 1 to 9, wherein the determining a second map comprises:

determining at least one map whose similarity value is greater than a specified threshold; and
performing verification on the at least one map whose similarity value is greater than the specified threshold by using an iterative closest point ICP algorithm, and selecting the second image.

11. A positioning apparatus, comprising:

a detection unit, configured to detect that a vehicle is passing through a looped road, wherein the looped road is a road whose shape is annular or whose turning angle is 360 degrees; and
a processing unit, configured to: construct a first map of the looped road based on three dimensional point cloud;
translate and/or rotate a location of the vehicle on the first map;
perform similarity comparison between a translated and/or rotated first map and a stored road map that the vehicle historically passes through and determine a second map, wherein the second map is a map that is similar to the first map and that is in the stored road map that the vehicle historically passes through; and
determine, based on the second map, location information of the vehicle before translation and/or rotation.

12. The apparatus according to claim 11, wherein a transceiver unit is configured to obtain mileage information of a first time period, wherein the first time period is a time period in which the sensor scans and generates one frame of three dimensional point cloud, and the mileage information is information recorded by an odometer;

the processing unit is further configured to: calculate pose information of the sensor in the first time period based on the mileage information of the first time period; and
perform motion compensation on the three dimensional point cloud of the frame corresponding to the first time period based on the pose information, to obtain a corrected three dimensional point cloud; and
the processing unit is specifically configured to construct the first map of the looped road based on the corrected three dimensional point cloud.

13. The apparatus according to claim 12, wherein the processing unit is further configured to:
perform 2.5 dimensional projection on the corrected three dimensional point cloud to obtain a 2.5 dimensional height map, wherein the 2.5 dimensional height map is a two dimensional map with a height that maps the three dimensional map to a plane according to a projection rule to display a three dimensional effect.

14. The apparatus according to any one of claims 11 to 13, wherein the processing unit is further configured to:
perform similarity comparison between the first map and a map of each frame in the stored road map that the vehicle historically passes through, to determine a similarity value between the first map and the map of each frame.

15. The apparatus according to any one of claims 11 to 14, wherein the processing unit is specifically configured to translate the vehicle by a specified distance on the first map; and
perform similarity comparison between a translated first map and a map of each frame in the stored road map that the vehicle historically passes through, to determine a similarity value between the translated first map and the map of each frame.

16. The apparatus according to any one of claims 11 to 15, wherein the processing unit is specifically configured to rotate the vehicle by a specified angle on the first map; and
perform similarity comparison between a rotated first map and a map of each frame in the stored road map that the vehicle historically passes through, to determine a similarity value between the rotated first map and the map of each frame.

17. The apparatus according to any one of claims 11 to 16, wherein the processing unit is specifically configured to:

perform rasterization processing on the translated and/or rotated first map and the map of each frame, and determine a subscript index of each grid and a height value of each grid, wherein the subscript index is coordinate information of the grid on the map;
determine whether height values on the translated and/or rotated first map are the same as the height value corresponding to the same subscript index on the map of each frame;
determine a first quantity of grids that are on the map of each frame and whose height values are the same as the height value corresponding to the same subscript index on the translated and/or rotated first map; and
use a ratio of the first quantity of grids on the map of each frame to a total quantity of grids on the map of each frame as the similarity value.

18. The apparatus according to claim 17, wherein the processing unit is further configured to:

determine a grid area that is on the first map and whose height value is different from a height value corresponding to the same subscript index on the second map;
translate the grid area by several units of the subscript index;
compare a height value that is in the translated grid area with the height value corresponding to the same subscript index on the second map, and determine a second quantity of grids that are in the translated grid area and whose height values are the same as the height value corresponding to the same subscript index on the second map; and

use a ratio of a sum of the second quantity of grids and the first quantity of grids to a total quantity of grids on the second map as the similarity value.

19. The apparatus according to any one of claim 17 or 18, wherein the processing unit is further configured to:

determine a grid area that is on the first map and whose height value is different from the height value corresponding to the same subscript index on the second map;

rotate the grid area by a specified angle;

compare a height value that is in the rotated grid area with the height value corresponding to the same subscript index on the second map, and determine a third quantity of grids that are in the rotated grid area and whose height values are the same as the height value corresponding to the same subscript index on the second map; and

use a ratio of a sum of the third quantity of grids, the second quantity of grids, and the first quantity of grids to the total quantity of grids on the second map as the similarity value.

20. The apparatus according to any one of claims 11 to 19, wherein the processing unit is specifically configured to:

determine at least one map whose similarity value is greater than a specified threshold; and perform verification on the at least one map whose similarity value is greater than the specified threshold by using an iterative closest point ICP algorithm, and select the second image.

21. A vehicle, configured to perform the method according to any one of claims 1 to 10.

22. A computer-readable storage medium, wherein the computer-readable storage medium stores a computer program, and when the computer program is executed on a computer, the computer is enabled to perform the method according to any one of claims 1 to 10.

23. A computing device, comprising a memory and a processor, wherein the memory stores executable code, and when executing the executable code, the processor implements the method according to any one of claims 1 to 10.

Vehicle 100

Processor
102

Memory
103

Bus 104

Sensor
101

FIG. 1

| Detect that a vehicle is passing through a looped road | S201 |

| Construct a first map of the looped road based on three dimensional point cloud | S203 |

| Translate and/or rotate a location of the vehicle on the first map | S205 |

| Perform similarity comparison between a translated and/or rotated first map and a stored road map that the vehicle historically passes through and determine a second map | S207 |

| Determine, based on the second map, location information of the vehicle before translation and/or rotation | S209 |

FIG. 2

Odometer t

Multi-frame fusion

Laser point cloud t

2.5 dimensional projection

2.5 dimensional height map t

Multi-frame fusion

2.5 dimensional global height map

Search for a candidate set of possible loop closure

2.5 dimensional height map a

2.5 dimensional height map b

2.5 dimensional height map c

Pose optimization

ICP verification

ICP verification

ICP verification

2.5 dimensional fusion map a

2.5 dimensional fusion map b

2.5 dimensional fusion map c

Correct loop closure {t, b}

FIG. 3

FIG. 4(a)

FIG. 4(b)

FIG. 4(c)

| Height value | Index value |
|---|---|
| ... | |
| ○ | (r1, c1) |
| △ | (r2, c2) |
| □ | (r3, c3) |
| ◇ | (r4, c4) |
| ... | |

Search direction

Traversal direction

Reference frame

Current frame

FIG. 5

FIG. 6

700

Transceiver unit 701

Detection unit 702

Processing unit 703

FIG. 7

## INTERNATIONAL SEARCH REPORT

International application No.

**PCT/CN2021/071394**

| A. | CLASSIFICATION OF SUBJECT MATTER |
|---|---|

G05D 1/02(2020.01)i

According to International Patent Classification (IPC) or to both national classification and IPC

| B. | FIELDS SEARCHED |
|---|---|

Minimum documentation searched (classification system followed by classification symbols)

G05D, G01C

Documentation searched other than minimum documentation to the extent that such documents are included in the fields searched

Electronic data base consulted during the international search (name of data base and, where practicable, search terms used)

CNPAT, CNKI, WPI, EPODOC: 车, 回环, 闭环, 路, 点云, 地图, 构建, 构图, 相似度, 比对, 对比, 匹配, 定位, 位置, 旋转, 平移, 位移, vehicle, close?, loop, loopback, point+, cloud, map+, locat+, localizat+, match+, rotat+, translat+, displac+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112149471 A (BEIJING MOMENTA TECHNOLOGY CO., LTD.) 29 December 2020 (2020-12-29) description, paragraphs [0058]-[0090], and figures 1-2 | 1-23 |
| A | CN 110084272 A (HARBIN INSTITUTE OF TECHNOLOGY, SHENZHEN) 02 August 2019 (2019-08-02) entire document | 1-23 |
| A | CN 111912417 A (SHANGHAI SENSETIME LINGANG INTELLIGENT TECHNOLOGY CO., LTD.) 10 November 2020 (2020-11-10) entire document | 1-23 |
| A | CN 111578957 A (QUANZHOU INSTITUTE OF EQUIPMENT MANUFACTURING) 25 August 2020 (2020-08-25) entire document | 1-23 |
| A | CN 110530372 A (SHANGHAI SHANGTANG INTELLIGENT TECHNOLOGY CO., LTD.) 03 December 2019 (2019-12-03) entire document | 1-23 |
| A | US 2010070078 A1 (SAMSUNG ELECTRONICS CO., LTD.) 18 March 2010 (2010-03-18) entire document | 1-23 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2021** | **14 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/071394**

| Patent document cited in search report | | | Publication date (day/month/year) | Patent family member(s) | | | Publication date (day/month/year) |
|---|---|---|---|---|---|---|---|
| CN | 112149471 | A | 29 December 2020 | None | | | |
| CN | 110084272 | A | 02 August 2019 | CN | 110084272 | B | 08 January 2021 |
| CN | 111912417 | A | 10 November 2020 | None | | | |
| CN | 111578957 | A | 25 August 2020 | None | | | |
| CN | 110530372 | A | 03 December 2019 | WO | 2021056841 | A1 | 01 April 2021 |
| US | 2010070078 | A1 | 18 March 2010 | KR | 101503903 | B1 | 19 March 2015 |
| | | | | US | 8306738 | B2 | 06 November 2012 |
| | | | | KR | 20100031878 | A | 25 March 2010 |

Form PCT/ISA/210 (patent family annex) (January 2015)